# EUROPEAN PATENT SPECIFICATION

(11) **EP 1 997 285 B1**
(45) Date of publication and mention of the grant of the patent: **13.12.2017**
(21) Application number: 07732052.1
(22) Date of filing: 19.03.2007
(51) Int. Cl.: H04L 12/58, H04L 12/18

(54) **MANAGING MESSAGE DISTRIBUTION**
VERWALTUNG DER NACHRICHTENVERTEILUNG
GESTION DE DISTRIBUTION DE MESSAGE

(30) Priority: 17.03.2006 GB 0605341
(43) Date of publication of application: 03.12.2008
(73) Proprietor: 2 Ergo Limited, The Quays, Salford Manchester M50 3UB (GB)
(72) Inventor: HAWKES, Michael, Ian, Lancashire BB4 6QX (GB)
(74) Representative: Wilson Gunn
(86) International application number: PCT/GB2007/000958
(87) International publication number: WO 2007/107727

(56) References cited:
- US-A- 5 734 903
- US-A1- 2003 225 850
- US-A1- 2005 020 289

## Description

The present invention relates to a method for managing the distribution of messages in a network and in particular to managing the distribution of messages in a mobile telephone network.

It is known to provide many services over mobile networks to network users. Some services are simple peer to peer services such as SMS and multimedia messages. Other services such as ring tone delivery, chat, news or other data services are commercial services implemented by service providers. As there are typically a number of competing mobile networks in any territory and it is desirable for a service provider to be able to provide services to as many users as possible, it is necessary for each service provider to be able to connect to each separate network. This can be achieved by dealing directly with each network operator. More commonly, each service provider accesses the plurality of networks via an aggregator. An aggregator is operable to direct data/messages between each service provider and each subscriber via the appropriate network operator. This reduces the costs for each service provider in maintaining connectivity to each network of interest. The aggregators also keep track of the number of messages passing between users and service providers and thus provide an audit trail for invoicing.

In most cases, this system works effectively however some service providers are unscrupulous. Such service providers may for instance ignore unsubscribe orders and continue to send (and charge for) content. Alternatively, some service providers may continue to send (and charge for) content after a user preset credit limit has been breached. Other service providers may provide adult content to minors or other unsolicited content to users. As this content is routed through the aggregator and the network in the normal manner it is difficult to control such service providers other than with the blunt instrument of denying them access. Even if access is denied then the unscrupulous service provider may switch to an alternative aggregator and carry on as before.

Accordingly, there are difficulties at a network wide level in preventing unsolicited messages or invalid billing. There are also difficulties in applying sanctions to unscrupulous service providers. Additionally, it is difficult to protect minors from inappropriate content delivery.

US2005/020289 A1 discloses a method for blocking SMS spam messages in an SMS server or a mobile terminal. If the server receives an SMS message to be transmitted to a subscriber from a base station, it is determined if a spam blocking option is set. If the spam blocking option is set, a spam-blocking database is accessed to search for a phone number corresponding to the received message, so as to check whether the number is registered in the database. If the SMS message phone number is registered in the spam-blocking database, the procedure is ended without SMS message-processing for the message, so that spam messages are blocked from being transferred to the subscriber. If the terminal receives an SMS message, a spam-blocking database in the mobile terminal is accessed to determine if the received message is an SMS spam message. If the received message is an SMS spam message, the terminal is controlled not to notify receipt of the message.

US 5734903 A discloses a system for object oriented message filtering for selectively transferring a message between a client task and one or more server tasks for preprocessing, processing, and postprocessing comprises an object database having a filter object memory, an object management unit, a message transaction unit, and a locking unit. The object management unit creates a port object and one or more associated target message objects. The object management unit selectively creates one or more filter objects associated with a target message object, and selectively associates a preprocessor message object, a postprocessor message object, or both a preprocessor message object and a postprocessor message object with each filter object. The message transaction unit selectively routes a message sent by a client task and directed to a target message object to one or more associated preprocessor message objects prior to delivering the message to the target message object. After delivery to the target message object, the message transaction unit selectively routes the message to one or more associated postprocessor message objects. Server tasks receive messages from port objects associated with preprocessor message objects, target message objects, and postprocessor message objects, facilitating preprocessing, processing, and postprocessing operations.

It is an object of the present invention to provide an improved method, as claimed in claim 1, and a system, as claimed in claim 17, of managing message distribution in a network that overcomes or alleviates at least some of the above problems.

According to a first aspect of the present invention there is provided a method, as claimed in claim 1, of managing the distribution of a messages from a source to a destination comprising the steps of: determining whether a message should be subjected to one or a plurality of filters before onward distribution to its destination wherein if it is determined that the message should not be subjected to any filters, the message is distributed onward to the destination and if it is determined that the message should be subjected to one or a plurality of filters, the message is directed to the identified filter or to each identified filter in turn wherein: if the message meets the filtering criteria and if further filters are to be applied the message is directed onward to the next filter; if the message meets the filtering criteria and if no further filters are to be applied the message is distributed to its destination; and if, at any stage, the message does not meet the filtering criteria of a particular filter distribution of the message, the message is halted, characterised in that if a plurality of filters are applied, the filters are applied in a particular order determined by supplying information relating to filter location in the form of a list, the filter locations being ordered on the list in the order that they are required to be applied and sending the message to each filter location on the list, in turn.

This provides a method by means of which messages can be easily filtered if required. This further allows for the monitoring and if required the blocking of delivery of unwanted messages sent by unscrupulous senders.

In the present application, the term message has been used to encompass any data passed over a network from a particular source to one or more destinations. In particular, the present invention may be applied to a mobile telephone network or to a plurality of interconnected mobile telephone networks. In some embodiments, the method may be used to filter messages sent by service providers (or secondary service providers) to users either directly via a particular network or indirectly via an aggregator.

The filters may be implemented by any one or all of: the network operators, the service providers or the aggregators as desired or as appropriate. If the message does not meet the filtering criteria of a particular filter distribution of the message may be halted either permanently or until the filter receives a message release authorisation. The message release authorisation may be provided by any one or all of: the user, a nominated other authority, the service provider or the network operator.

The filters may comprise simple routines checking the sender or destination details against a database. With particular regard to mobile telephone networks, the filters may comprise routines checking that the destination (user) has not exceeded a predetermined credit limit in a predetermined time period or that the destination (user) is not attempting to receive messages containing content, such as adult content, that they have requested not to receive.

The user may set the filters that they wish to have applied to messages sent to them from a particular source. The source may be a commercial source such as a service provider or may be another user. The filters may be reset or may be overridden by a specific request sent by the user. The request may be in response to an authorisation request or similar. Additionally or alternatively, the request need not be sent via a mobile network but may be sent via the internet, email or via the appropriate postal service. The user may set the filters by means of a request to the source or by a request to the network operator or to any other applicable body.

Determining whether a particular message is to be subjected to one or more filters, may comprise the steps of: decoding the message source and destination identifiers; generating a key from said source and destination identifiers; performing a directory service lookup using said key wherein if said key exists in the directory the message is to be subjected to one or more filters and wherein if said key does not exist in the directory the message is not to be subject to filters before distribution to the identified destination.

This method enables high speed lookup to be implemented. This allows the method to be implemented without providing a significant delay in delivering messages that are not filtered.

The message source and destination identifiers may be network addresses of the source and destination. In a mobile telephone network, the message source and destination identifiers are preferably the phone numbers of the message source and the message destination. In other networks, by way of example, the message source and destination identifiers could be email addresses or internet protocol addresses.

If said key exists in the directory, the method may include the further step of receiving from the directory associated information relating to the location of the or each filter to be applied to the message before the message may be distributed to its identified destination.

The information relating to filter location may be supplied in the form of a list of filter locations. The filter locations may be ordered on the list in the order that they are required to be applied.

The associated filter location information may be updated separately to the key. Updating the location information may take the form of adding, removing or reordering the location information. In this manner, the particular filtering to be applied to a particular message pathway can be rapidly and simply varied.

The filters may comprise simple routines checking the sender or destination details against a database.

Directing a message to a plurality of filters of known locations in a desired order may comprise the steps of: generating a list of the filter locations, the filter locations on the list being arranged in the desired order; appending said list to said message; directing said message to the first filter location on said list; subsequently removing said first filter location from said list thereby generating a new list; and sending the message to the first filter location on said new list.

This provides a standard method by which one or more filters can be applied to a message and wherein different filters may be applied to different messages. The method also ensures that it is relatively easy to track the progress of the message.

The filter locations may be provided in the form of Uniform Resource Locators (URLs). If required, one or more of the filters may be operable to add one or more additional filter locations to the list. Additionally or alternatively, one or more of the filters may be operable to remove one or more filter locations from the list. Furthermore, one or more of the filters may be operable to change the order of filter locations on the list. The added, removed or re-ordered filter locations may be in respect of either meeting filter criteria or not meeting filter criteria.

If the message does not meet the filtering criteria of a particular filter distribution of the message may be halted either permanently or until the filter receives a message release authorisation. If the message meets the filtering criteria and if no further filters are to be applied the message is distributed to its destination The filters may comprise simple routines checking the sender or destination details against a database.

According to a second aspect of the present invention there is provided a message distribution management system, as claimed in claim 17, operating in accordance with the methods of the first aspect of the present invention.

The filters to be applied to the message(s) may be provided at separate locations connected to the message distribution management system. In this way, the message distribution management system can be operable for determining whether to apply a filter ands for distributing messages to filters or to destinations. As such, the message distribution management system is able to operate the above methods with minimal delay.

The message distribution system may be operable to manage the distribution of messages between mobile service providers and subscribers to a mobile telephone network. The message distribution system may additionally or alternatively be operable to manage the distribution of messages between mobile telephone networks provided by different network operators. In such embodiments, the message distribution management system is preferably connected to one or more network operators and to one or more aggregators.

The system may be operable to vary any one or all of the following: whether filtering is to be applied to a particular message pathway, what filters are to be applied to particular message pathways and in what order filters are to be applied to particular message pathways. Preferred embodiments are covered by the dependent claims. In order that the invention be more clearly understood, it will now be described by way of example only and with reference to the accompanying drawings, in which: -
Figure 1 shows a block diagram of a known arrangement for enabling service providers to route data, messages and services to users of a network;
Figure 2 shows a block diagram of a new network access arrangement according to the present invention;
Figure 3 is a flow diagram indicating the method of operation of the network of figure 2;
Figure 4a is a block diagram of the routing information for a message provided on entry to the network access arrangement;
Figure 4b is a block diagram of the routing information for a message provided after entry to the network access arrangement, wherein the message is to pass through a single filter before onward distribution; and
Figure 4c is a block diagram of the routing information for a message provided after entry to the network access arrangement, wherein the message is to pass through a plurality of filters before onward distribution.

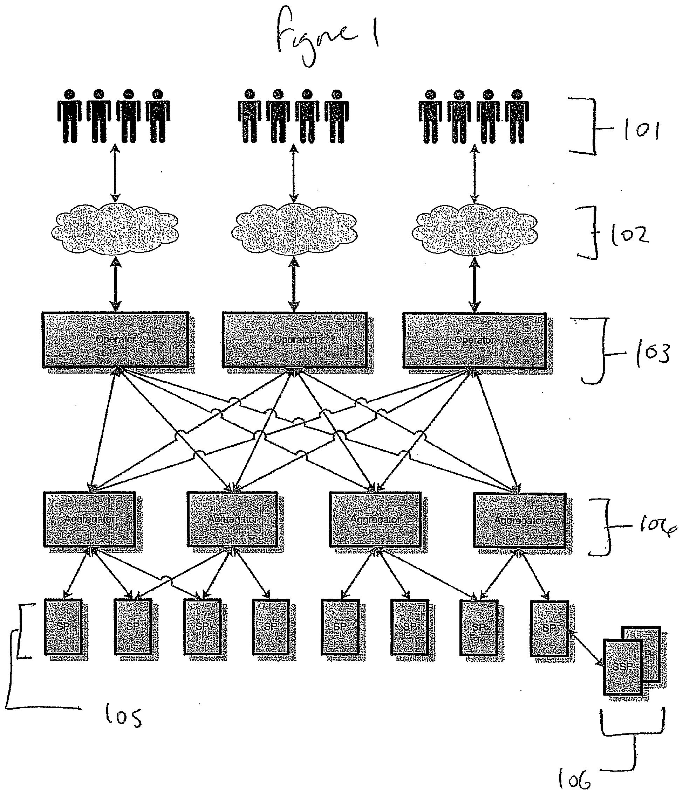

Referring now to figure 1, a schematic block diagram of a mobile telephone system 100 for a particular territory is shown. In the mobile telephone system 100, a plurality of users 101 are able to connect to a plurality (in this example, three) of different mobile networks 102 each operated by a different network operator 103. A plurality of service providers 105 or secondary service providers 106 provide services to the user 101. These services might typically include ring tones, news, games, audio/visual content or similar.

The service providers 105 are each connected to the network operators 103 via one or more aggregators 104. The aggregators 104 provide the service providers 105 with access to each network 103 via a single portal. The aggregators 104 also act to keep a record of traffic between each service provider 105 and each user 101 subscribing to the particular service provider 105 (or to supplementary services provided by supplementary service providers 106, which may be connected to aggregators via a service provider 105). This enables the aggregator 104, network operator 103 and service provider 105 to correctly invoice the user 101.

In some cases, the service provider 105 may send a user 101 unsolicited messages or may continue to send a user 101 messages after the user 101 has sent an unsubscribe message. As the aggregator does not keep track of the content of messages sent between users 101 and service providers 105, they cannot be sure whether messages sent by a service provider 105 are legitimate. Accordingly, the aggregators typically act to deliver (and charge for) all messages sent by a service provider 105, unless sufficient complaints are received. In such circumstances the service provider 105 may be denied access to the various networks 102.

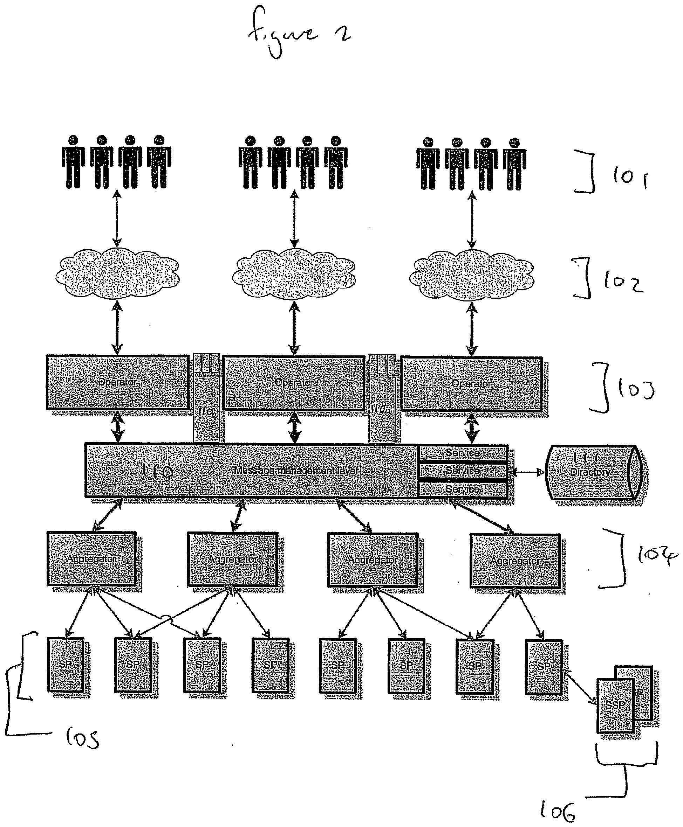

In order to overcome such problems, the present invention proposes an arrangement according to figure 2. This provides a message distribution management system 110 positioned between the network operators 103 and the aggregators 104. The message distribution management system 110 is operable to apply one or more filters to particular messages travelling between the aggregators and the network operators 103. If any messages do not comply with the applied filter criteria, they are halted.

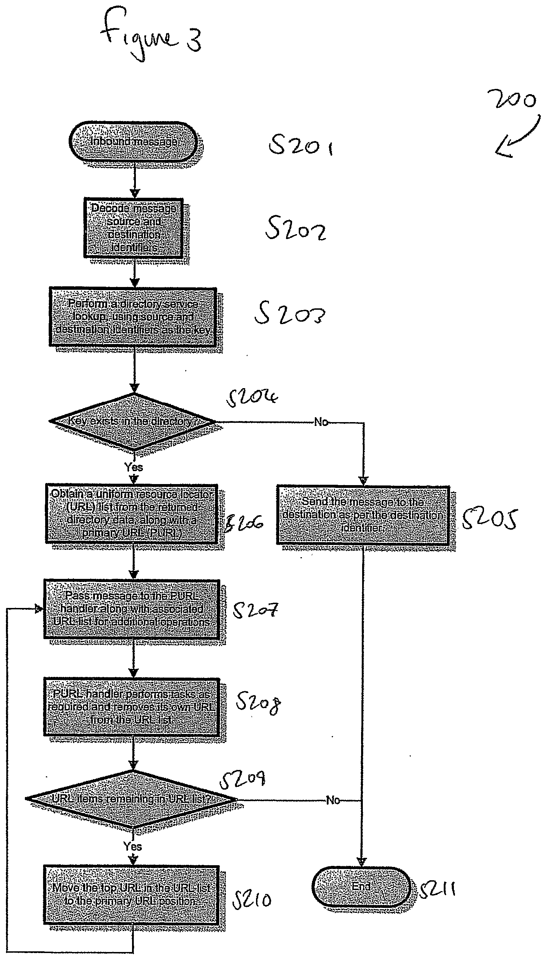

The message distribution management system 110 operates in accordance with the method outlined in the flow chart of figure 3. The first step is the receipt of an inbound message at s201. The inbound message s201 is then processed at s202 to determine the message source and destination identifiers. At step s203, the message source and destination identifiers are then combined to form a key and the key is used as a lookup device in respect of records stored in directory 111. At s204 it is assessed whether there is a key in the directory matching the key generated from the source and destination identifiers. If no key is found, then the method progresses to step s205 wherein the message is sent to the destination indicated. This ends the operation routine of the message distribution management system 110 for the particular message. This is a fast lookup method as the key is generated simply by combining source and destination identifiers and as there are only keys provided for messages requiring filtering. Accordingly messages to which no filter is applied can be rapidly distributed to their desired destination without noticeable delay.

If there is a key in the directory matching the generated key then the method progresses to step s206. This step involves obtaining a URL (uniform resource locator) list from the directory. The URL list provides the location (and if required the identification) of the or each filter to be applied to the message before delivery. The URL list is arranged in an order such that the first URL on the URL list is the primary URL and corresponds to the location of the first filter to be applied. Later URLs on the URL list correspond to the location of later filters to be applied.

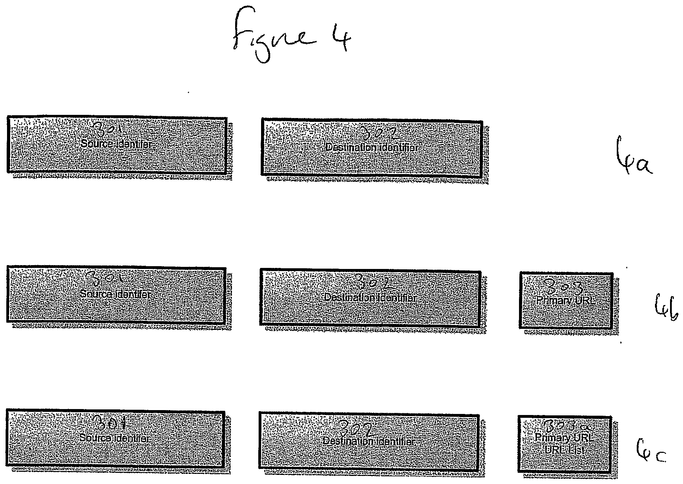

This is illustrated further in figure 4. Figure 4a shows the source and destination identifiers 301, 302 of a message separated from the rest of the message. These identifiers are used to generate a key for retrieving filter information form a directory. In figure 4b a primary URL 303 (or first filter location) has been retrieved and is appended to the message. In figure 4c, a URL list 303a comprising a primary URL (or first filter location) and one or more secondary URLs has been retrieved and is appended to the message.

The filter locations are identified by URLs as they may be implemented by any suitable part of the telephone system 100. Typically the filters would therefore not be applied by the message distribution management system 110, but would be applied by a particular aggregator 104, service provider 103 or network operator 105. This is undertaken at step s207 wherein the message distribution management system 110 is operable to determine the location of the first filter in the list from the appended URL and distribute the message to that filter.

Once the message is received at the first filter location the first filter is applied. If the message conforms with the filter criteria, the method progresses to step s208 wherein the first filter location is removed from the URL list. If the message does not conform with the filter criteria, its distribution is halted. This may be a permanent halt or may be a halt pending a message release authorisation.

It is then determined whether there are any further filter locations on the URL list at step s209. If there are no further filter locations on the URL list, the method ends and the message is distributed to its intended destination at s211. If however, there are further filter locations on the URL list, the second filter location on the URL list is moved to the primary position on the URL list at step s210 and the method reverts to step s207 wherein the message is then directed to the location of the second filter from the original URL list, which is of course now the first filter location on the new URL list.

This loop s207-s210 continues until filter criteria are not met, in which case the method ends at s211 and halts delivery of the message or until all filters in the URL list have been applied, in which case the message ends at s211 by distributing the message to its intended destination.

This method of applying a plurality of features in order is a standard approach that can be applied rapidly and simply to any message in the system. Additionally, variation in filtering requirements can be rapidly implemented by varying the URL list relating to a particular key. Additionally, if the filters are located at the aggregators 104 or the service providers 106, the operation of the message distribution management system can be implemented without causing significant delays to delivery of unfiltered messages.

As an example the system 110 may be applied to data services provided for a user 101 by a service provider 105. The data services may for example comprise ring tones wherein the user 101 has requested that a number of ring tones be provided to the user 101 by the service provider 105 per month. The user 101 may have set a monthly spending limit with the service provider 105. In such a case, spending limit may be the first filter applied.

The operation could occur as follows, firstly a ring tone is sent by one of the service providers 105 to a user 101. This message is received by the message distribution management system 110 via one of the aggregators 104. The message distribution management system 110 generates a key by combining the short code number of the service provider 105 and the mobile telephone number of the user 101. This key is used to search the directory 111 whereupon it is determined that there is a filter to be applied to messages transmitted from the particular source to the particular destination. The directory thus supplies the message distribution management system 110 with the URL of the filter, which may be at one of the aggregators 104. The message is thus directed back to the relevant aggregator 104.

The aggregator 104 then applies the particular filter. In this case this involves looking up the users account with the service provider 105 and determining whether the user 101 has exceeded their monthly credit limit. If it is determined that the user 101 has not exceeded their credit limit, the filter URL is removed from the message and it is directed back to the message distribution management system 110 for onward distribution to the user 101. If the user 101 has exceeded their credit limit then the message is halted. In some embodiments, the message may then be deleted. In other embodiments, this may trigger the filter to cause a new message to be sent to the user 101 indicating that they are out of credit and requesting specific authorisation to overrule the filter either on a one time basis or a permanent basis. If authorisation is given, the message is directed back to the message distribution management system 110 for distribution to the user 101.

In a further example, an additional filter is applied which determines whether or not any requested information contains adult content. In such a case, if the message passes the first filter it is then directed to a second URL wherein the adult content filter is applied. This second filter may be provided by the service provider, the aggregator, or the network operator 103. If the message contains no adult content, the message is directed back to the message distribution management system 110 which distributes it to the user 101. If the message does contain adult content, as determined by the filter, it is halted. As before the halt may be permanent or may trigger the sending of an authorisation request. The user 101 may then override the filter. Alternatively, if the user is a minor, the authorisation request may be sent to the parent or guardian of the user 101.

The message distribution management system 110 need not only be provided between commercial operators 104, 105 106 and network users 101 but may also be provided between individual users 101 and or between different networks 103 (as is illustrated by the shadow message distribution management systems 110a shown in figure 2. This could be used to prevent harassment of one user 101 by another user 101 either in response to a complaint by a harassed user or potentially in response to a court order.

An additional advantage of the present invention is that it can reduce the number of connections needed to be maintained by each aggregator 104. Furthermore, as the aggregators 104 and the network operators 103 are able to use the message distribution management system 110 of the present invention to provide additional services to users 101 and to improve their accounting and reporting capabilities.

It is of course to be understood that the invention is not to be restricted to the details of the above embodiment which is described by way of example only. The scope of the invention is defined by the appended claims.

## Claims

1. A method of managing the distribution of messages from a source to a destination comprising the steps of: determining whether a message should be subjected to one or more filters before onward distribution to its destination wherein if it is determined that the message should not be subjected to any filters (s204), the message is distributed onward to the destination (s205) and if it is determined that the message should be subjected to one or a plurality of filters (s204), the message is directed to the identified filter (s207) or to each identified filter in turn wherein: if the message meets the filtering criteria and if further filters are to be applied the message is directed onward to the next filter (s210); if the message meets the filtering criteria and if no further filters are to be applied the message is distributed to its destination (s211); and if, at any stage, the message does not meet the filtering criteria of a particular filter distribution of the message is halted, wherein if a plurality of filters are applied, the filters are applied in a particular order determined by supplying information relating to filter location in the form of a list (303a) (s206), the filter locations being ordered on the list (303a) in the order that they are required to be applied and sending the message to each filter location on the list (303a), in turn (s207-s210).

2. A method as claimed in claim 1 wherein the method is applied to a mobile telephone network (102) or to a plurality of interconnected mobile telephone networks (102).

3. A method as claimed in any preceding claim wherein the method is used to filter messages sent by service providers (105) or secondary service providers to users (101) either directly via a particular network (102) or indirectly via an aggregator (104) operable to direct messages between each service provider (105) and each user (101) via the appropriate network operator (103) and wherein the filters are implemented by any one or more of: the network operators (103), the service providers (105) or the aggregators (104).

4. A method as claimed in any preceding claim wherein if the message does not meet the filtering criteria of a particular filter distribution the message is halted permanently.

5. A method as claimed in any preceding claim wherein if the message does not meet the filtering criteria of a particular filter distribution of the message is halted until the filter receives a message release authorisation provided by any one or more of: the user (101), a nominated other authority, the service provider (105) or the network operator (103).

6. A method as claimed in any preceding claim wherein the filters comprise any one or more of: simple routines checking the sender or destination details against a database; routines checking that the destination has not exceeded a predetermined credit limit in a predetermined time period; and routines checking that the destination is not attempting to receive messages containing content that they have requested not to receive.

7. A method as claimed in any preceding claim wherein the user (101) sets the filters that they wish to have applied to messages sent to them from a particular source and wherein the filters are reset or overridden by a specific request sent by the user (101).

8. A method as claimed in any preceding claim wherein it is determined whether a particular message is to be subjected to one or more filters, by the steps of: (s201) decoding the message source and destination identifiers (301, 302); (s203) generating a key from said source and destination identifiers (301, 302); performing a directory (111) service lookup using said key wherein if said key exists in the directory (111) the message is to be subjected to one or more filters (s204) and wherein if said key does not exist in the directory (111) the message is not to be subject to filters before distribution to the identified destination (s205).

9. A method as claimed in claim 8 wherein the message source and destination identifiers (301, 3020 are network addresses of the source and destination or the phone numbers of the source and destination.

10. A method as claimed in claim 8 or claim 9 wherein the filters comprise simple routines checking the sender or destination details against a database.

11. A method as claimed in any one of claims 8 to 10 wherein if said key exists in the directory (111), the method includes the further step of receiving from the directory (111) associated information relating to the location of the or each filter to be applied to the message before the message is distributed to its identified destination.

12. A method as claimed in claim 11 wherein the associated filter location information is updated separately to the key.

13. A method as claimed in claim 12 wherein updating the location information takes the form of adding, removing or reordering the location information.

14. A method as claimed in any preceding claims wherein the message is directed to the plurality of filters of known location in the desired order, by the steps of: generating the list (303a) of the filter locations, the filter locations on the list (303a) being arranged in the desired order (s206); appending said list (303a) to said message; directing said message to the first filter location (303) on said list (303a) (s207); subsequently removing said first filter location (303) from said list (303a) thereby generating a new list (303a) (s210); and sending the message to the first filter location (303) on said new list (303a) (s207).

15. A method as claimed in claim 14 wherein the filter locations are provided in the form of Uniform Resource Locators (URLs).

16. A method as claimed in claim 14 or claim 15 wherein one or more of the filters are operable to: add one or more additional filter locations to the list (303a); remove one or more filter locations from the list (303a); or change the order of filter locations on the list (303a).

17. A message distribution management system (110) for managing the distribution of messages from a source to a destination comprising: message directing means for directing a message to a location; and means for determining whether a message should be subjected to one or more filters before onward distribution to its destination, wherein if it is determined that the message should not be subjected to any filters, the message is distributed onward to the destination by the message directing means and if it is determined that the message should be subjected to one or a plurality of filters, the message is directed to the identified filter by the message directing means or to each identified filter in turn by the message directing means wherein: if the message meets the filtering criteria and if further filters are to be applied the message is directed onward to the next filter; if the message meets the filtering criteria and if no further filters are to be applied the message is distributed to its destination; and if, at any stage, the message does not meet the filtering criteria of a particular filter distribution of the message is halted, wherein if a plurality of filters are applied the filters are applied in a particular order determined by supplying information relating to filter location in the form of a list (303a), the filter locations being ordered on the list (303a) in the order that they are required to be applied and sending the message to each filter location on the list (303a), in turn.

18. A message distribution management system (110) as claimed in claim 17 wherein the filters to be applied to the distributed message are provided at separate locations connected to the message distribution management system (110).

19. A message distribution management system (110) as claimed in claim 18 wherein the system is operable to vary any one or all of the following: whether filtering is to be applied to a particular message pathway, what filters are to be applied to particular message pathways and in what order filters are to be applied to particular message pathways.

## Patentansprüche

1. Verfahren zum Verwalten der Verteilung von Nachrichten von einer Quelle zu einem Ziel aufweisend die Schritte: Bestimmen ob eine Nachricht einem oder mehreren Filtern vor Weiterverbreitung an ihr Ziel unterworfen werden soll, wobei wenn bestimmt wird, dass die Nachricht nicht irgendwelchen Filtern (s204) unterworfen werden soll, die Nachricht an das Ziel weitergeleitet wird (s205) und wenn bestimmt wird, dass die Nachricht einem oder einer Vielzahl von Filtern unterworfen werden soll (s204), die Nachricht zu dem identifizierten Filter (s207) oder zu jedem identifizierten Filter der Reihe nach geleitet wird, wobei wenn die Nachricht ein Filterkriterium erfüllt, und wenn weitere Filter angewendet werden sollen, die Nachricht an den nächsten Filter weitergeleitet wird (s210); wobei wenn die Nachricht das Filterkriterium erfüllt und wenn keine weiteren Filter angewendet werden sollen, die Nachricht an ihr Ziel verteilt wird (s211) und wenn in jedem Stadium die Nachricht nicht den Filterkriterien eines bestimmten Filters entspricht, die Weiterleitung der Nachricht unterbunden wird, wobei
wenn eine Vielzahl an Filtern angewendet wird, die Filter in einer bestimmten Reihenfolge angewendet werden, welche durch Versorgung mit Informationen in Bezug auf die Filterposition in Form einer Liste (303a) (s206) bestimmt wird, wobei die Filterorte auf der Liste (303a) in der Reihenfolge geordnet sind, in der sie bestimmt sind angewendet zu werden und die Nachricht zu jedem Filterort auf der Liste (303a) in der Reihenfolge (s207-s210) gesendet wird.

2. Verfahren nach Anspruch 1, wobei das Verfahren auf ein Mobilfunknetzwerk (102) oder auf eine Vielzahl von miteinander verbundenen Mobilfunknetzwerke (102) angewendet wird.

3. Verfahren nach einem der vorhergehenden Ansprüche, wobei das Verfahren verwendet wird, um Nachrichten, welche von einem Dienstanbieter (105) oder einem sekundären Dienstanbieter an Benutzer (101) entweder direkt über ein bestimmtes Netzwerk (102) oder indirekt über einen Aggregator (104) betreibbar um Nachrichten zwischen jedem Dienstleister (105) und jedem Benutzer (101) über einen geeigneten Netzwerkbetreiber (103) zu richten, gesendet werden und wobei die Filter implementiert von einem oder mehreren von: den Netzwerkbetreibern (103), den Dienstanbietern (105) oder den Aggregatoren (104) sind.

4. Verfahren nach einem der vorhergehenden Ansprüche, wobei wenn die Nachricht nicht den Filterkriterien einer bestimmten Filterverteilung entspricht, die Nachricht dauerhaft angehalten wird.

5. Verfahren nach einem der vorangehenden Ansprüche, wobei wenn die Nachricht nicht den Filterkriterien einer bestimmten Filterverteilung der Nachricht entspricht, die Nachricht gestoppt wird bis der Filter eine Nachrichtenfreigabeberechtigung von einem oder mehreren von: dem Benutzer (101), eine bestimmte andere Autorität, dem Dienstanbieter (105) oder dem Netzwerkbetreiber (103) empfängt.

6. Verfahren nach einem der vorhergehenden Ansprüche, wobei die Filter einen oder mehrere von: einfache Routinen, welche die Sender- oder die Zieldetails gegen eine Datenbank überprüfen; Routinen, die überprüfen, dass das Ziel ein vorbestimmtes Kreditlimit in einer vorbestimmten Zeitspanne nicht überschritten hat; und Routinen, welche überprüfen, dass das Ziel nicht versucht, Nachrichten zu empfangen, welche Inhalte beinhalten, welche es beantragt hatten nicht zu empfangen.

7. Verfahren nach einem der vorhergehenden Ansprüche, wobei der Benutzer (101) die Filter einstellt, welche er wünscht, dass sie auf Nachrichten, welche von einer bestimmten Quelle gesendet werden, angewendet werden, und wobei die Filter zurückgesetzt oder überschrieben werden durch eine bestimmte Anfrage, welche von dem Benutzer (101) gesendet wird.

8. Verfahren nach einem der vorhergehenden Ansprüche, wobei es bestimmt wird, ob eine bestimmte Nachricht einem oder mehreren Filtern ausgesetzt wird durch die Schritte: (s201) Dekodieren der Nachrichtenquelle- und Zielidentifizierer (301, 302); (s203) Erzeugen eines Schlüssels aus den Quell- und Zielidentifizierern (301, 302); Durchführen einer Verzeichnisservicesuche (111) unter Verwendung des Schlüssels, wobei wenn der Schlüssel in dem Verzeichnis (111) existiert, die Nachricht einen oder mehreren Filtern (s204) ausgesetzt wird, und wenn der Schlüssel in dem Verzeichnis (111) nicht existiert, die Nachricht keine Filter vor der Verteilung an das identifiziertes Ziel (s205) ausgesetzt wird.

9. Verfahren nach Anspruch 8, wobei die Nachrichtenquellen- und Zielidentifizierer (301, 302) Netzwerkadressen der Quelle und des Ziels oder die Telefonnummern der Quelle und des Ziels sind.

10. Verfahren nach Anspruch 8 oder 9, wobei die Filter einfache Routinen zum Überprüfen der Sender- oder Zieldetails gegen eine Datenbank aufweisen.

11. Verfahren nach einem der Ansprüche 8 bis 10, wobei wenn der Schlüssel in dem Verzeichnis (111) existiert das Verfahren jeweils die Schritte aufweist: Empfangen zugehörige Informationen, welche sich auf den Ort oder auf die Nachricht anzuwendenden Filters beziehen von dem Verzeichnis (111), bevor die Nachricht zu ihrem identifizierten Ziel verteilt wird.

12. Verfahren nach Anspruch 11, wobei die Information zum zugehörigen Filterort separat in dem Schlüssel upgedatet wird.

13. Verfahren nach Anspruch 12, wobei das Updaten der Ortsinformation die Form von Hinzufügen, Entfernen oder Neuanordnen der Ortsinformation annimmt.

14. Verfahren nach einem der vorhergehenden Ansprüche, wobei die Nachricht an die Vielzahl von Filtern an bekannten Orten der gewünschten Reihenfolge geleitet wird durch die Schritte: Erzeugen einer Liste (303a) von Filterorten, wobei die Filterorte auf der Liste (303a) in einer gewünschten Reihenfolge angeordnet sind (s206); Anhängen der Liste (303a) an die Nachricht; Richten der Nachricht an den ersten Filterort (303) auf der Liste (303a) (s207); anschließend entfernen des ersten Filterortes (303) von der Liste (303a), wobei eine neue Liste (303a) erzeugt wird (s210); und Senden der Nachricht an den ersten Filterort (303) auf der neuen Liste (303a) (s207).

15. Verfahren nach Anspruch 14, wobei die Filterorte in Form von Uniform Resource Locators (URLs) bereitgestellt werden.

16. Verfahren nach Anspruch 14 oder 15, wobei einer oder mehrere der Filter betreibbar sind, um: ein oder mehrere zusätzliche Filterorte auf die Liste (303a) hinzuzufügen; Entfernen von ein oder mehreren Filterorten von der Liste (303a); oder Ändern der Reihenfolge der Filterorte auf der Liste (303a).

17. Managementsystem zur Nachrichtenverteilung (110) zum Managen der Verteilung von Nachrichten von einer Quelle zu einem Ziel aufweisend: Mittel zum Nachrichten richten, um eine Nachricht an einen Ort zu richten; Mittel zum Bestimmen, ob eine Nachricht einem oder mehreren Filtern von der Weiterverteilung zu ihrem Ziel unterworfen werden sollen, wobei wenn festgestellt wird, dass die Nachricht keinem Filter unterworfen werden soll, die Nachricht zu dem Ziel weitergeleitet wird durch die Mittel zum Nachrichten richten, und wenn festgestellt wird, dass die Nachricht einem oder mehreren Filtern unterworfen werden soll, die Nachricht zu dem identifizierten Filter durch die Mittel zum Nachrichten richten gerichtet wird oder zu dem identifizierten Filter der Reihe nach durch die Mittel zum Nachrichten richten, wobei: wenn die Nachricht dem Filterkriterium entspricht und wenn weitere Filter angewendet werden sollen, die Nachricht in Richtung des nächsten Filters gerichtet wird; wenn die Nachricht den Filterkriterien entspricht und keine weiteren Filter auf die Nachricht angewendet werden sollen, die Nachricht in Richtung ihres Ziels weitergeleitet wird; und wenn zu einem Zeitpunkt die Nachricht nicht den Filterkriterien einer bestimmten Filterverteilung entspricht, die Nachricht angehalten wird, wobei wenn eine Vielzahl von Filtern angewendet wird, die Filter in einer bestimmten Reihenfolge, welche durch unterstützende Informationen, welche sich auf den Filterort in Form einer Liste (303a) beziehen, angewendet wird, wobei die Filterorte auf der Liste (303a) in der Reihenfolge geordnet sind, in der sie angewendet werden sollen, und wobei sie die Nachricht zu jedem Filterort der Reihe nach auf der Liste (303a) gesendet wird.

18. Managementsystem zur Nachrichtenverteilung (110) nach Anspruch 17, wobei die Filter die auf die verteilte Nachricht angewendet werden sollen, an separaten Orten, welche mit dem Managementsystem zur Nachrichtenverteilung (110) verbunden sind, vorgesehen sind.

19. Managementsystem zur Nachrichtenverteilung (110) nach Anspruch 18, wobei das System betreibbar sind um eines oder alles der Folgenden zu variieren: ob das Filtern auf einem bestimmten Nachrichtenpfad angewendet wird, welche Filter auf bestimmten Nachrichtenpfaden angewendet werden, und in welcher Reihenfolge Filter auf bestimmte Nachrichtenpfade angewendet werden.

## Revendications

1. Procédé de gestion de la distribution de messages d'une source à une destination, comprenant les stades de : détermination si un message doit être soumis à un filtre ou à plusieurs filtres avant de poursuivre sa distribution à sa destination, dans lequel, s'il est déterminé que le message ne doit pas être soumis à des filtres (s204), on poursuit la distribution du message à la destination (s205) et s'il est déterminé que le message doit être soumis à un filtre ou à une pluralité de filtres (s204), on envoie le message au filtre (s207) identifié ou à chaque filtre identifié, tour à tour, dans lequel : si le message satisfait les critères de filtrage et si d'autres filtres doivent être appliqués, on poursuit l'envoi du message au filtre (s210) suivant; si le message satisfait les critères de filtrage et si un autre filtre ne doit pas être appliqué, on distribue le message à sa destination (s211); et si, à un stade quelconque, le message ne satisfait pas les critères de filtrage d'un filtre particulier, on arrête la distribution du message, dans lequel, si une pluralité de filtres est appliquée, on applique les filtres dans un ordre particulier déterminé en envoyant de l'information se rapportant à l'emplacement du filtre, sous la forme d'une liste (303a) (s206), les emplacements de filtre étant ordonnés sur la liste (303a) dans l'ordre où ils exigent d'être appliqués et on envoie le message à chaque emplacement de filtre de la liste (303a), tour à tour (s207-s210).

2. Procédé suivant la revendication 1, dans lequel on applique le procédé à un réseau (102) de téléphonie mobile ou à une pluralité de réseaux (102) de téléphonie mobile interconnectés.

3. Procédé suivant l'une quelconque des revendications précédentes, dans lequel on utilise le procédé pour filtrer des messages envoyés par des fournisseurs (105) de service ou des fournisseurs secondaires de service à des utilisateurs (101), soit directement par l'intermédiaire d'un réseau (102) particulier, soit indirectement par l'intermédiaire d'un agrégateur (104) pouvant fonctionner pour envoyer des messages entre chaque fournisseur (105) de service et chaque utilisateur (101), par l'intermédiaire de l'opérateur (103) de réseau approprié, et dans lequel on met en oeuvre les filtres par n'importe lequel du un ou des plusieurs opérateurs (103) de réseau, des fournisseurs (105) de service ou des agrégateurs (104).

4. Procédé suivant l'une quelconque des revendications précédentes, dans lequel, si le message ne satisfait pas les critères de filtrage d'un filtre particulier, on arrête, d'une manière permanente, la distribution du message.

5. Procédé suivant l'une quelconque des revendications précédentes, dans lequel, si le message ne satisfait pas les critères de filtrage d'un filtre particulier, on arrête la distribution du message jusqu'à ce que le message reçoive une autorisation de libération du message fournie par n'importe lequel de l'un ou plusieurs de : l'utilisateur (101), une autre autorité désignée, le fournisseur (105) de service ou l'opérateur (103) du réseau.

6. Procédé suivant l'une quelconque des revendications précédentes, dans lequel les filtres comprennent l'un ou plusieurs : de simples routines vérifiant des détails de l'émetteur ou de la destination dans une base de données; des routines vérifiant que la destination n'a pas dépassé une limite de crédit définie à l'avance, dans un laps de temps défini à l'avance, et de routines vérifiant que la destination n'essaie pas de recevoir des messages contenant un contenu qu'elles ont demandé de ne pas recevoir.

7. Procédé suivant l'une quelconque des revendications précédentes, dans lequel l'utilisateur (101) fixe les filtres dont on souhaite qu'ils reçoivent des messages qui leur sont envoyés d'une source particulière et dans lequel les filtres sont refixés ou substitués par une demande précise envoyée par l'utilisateur (101).

8. Procédé suivant l'une quelconque des revendications précédentes, dans lequel on détermine si un message particulier doit être soumis à un filtre ou à plusieurs filtres par les stades de : (s201) décodage d'identificateurs (301, 302) de la source et de la destination du message; (s203) production d'une clé à partir des identificateurs (31, 302) de la source et de la destination; consultation d'un répertoire (111) utilisant la clé, dans lequel, si la clé existe dans le répertoire (111), le message doit être soumis à un filtre ou à plusieurs filtres (s204) et dans lequel, si la clé n'existe pas dans le répertoire (111), le message ne doit pas être soumis à des filtres avant d'être distribué à la destination identifiée (s205).

9. Procédé suivant la revendication 8, dans lequel les identificateurs (301, 302) de la source et de la destination du message sont des adresses de réseau de la source et de la destination ou les numéros de téléphone de la source et de la destination.

10. Procédé suivant la revendication 8 ou la revendication 9, dans lequel les filtres comprennent de simples routines vérifiant des détails de l'émetteur ou de la destination dans une base de données.

11. Procédé suivant l'une quelconque des revendications 8 à 10, dans lequel, si la clé existe dans le répertoire (111), le procédé comprend le stade supplémentaire de réception de la part du répertoire (111), d'une information associée se rapportant à l'emplacement du filtre ou de chaque filtre à appliquer au message avant que le message soit distribué à sa destination identifiée.

12. Procédé suivant la revendication 11, dans lequel l'information associée à l'emplacement du filtre est mise à jour séparément de la clé.

13. Procédé suivant la revendication 12, dans lequel la mise à jour de l'information d'emplacement prend la forme d'une addition, d'un retrait ou d'un réordonnancement de l'information d'emplacement.

14. Procédé suivant l'une quelconque des revendications précédentes, dans lequel on envoie le message à une pluralité de filtres d'emplacement connus dans l'ordre souhaité par les stades de : création de la liste (303a) des emplacements de filtre, les emplacements de filtre sur la liste (303a) étant mis dans l'ordre (s206) souhaité; mise, en annexe du message, de la liste (303a); envoie du message au premier emplacement (303) de filtre sur la liste (303a) (s207); retrait ensuite du premier emplacement (303) de filtre de la liste (303a) en créant ainsi liste (303a) nouvelle (s210); et envoie du message au premier emplacement (303) de filtre sur la liste (303a) nouvelle (s207).

15. Procédé suivant la revendication 14, dans lequel les emplacements de filtre sont prévus sous la forme de Uniform Resource Locators (URLs).

16. Procédé suivant la revendication 14 ou la revendication 15, dans lequel on peut faire fonctionner un filtre ou plusieurs filtres pour : ajouter un emplacement ou plusieurs emplacement supplémentaires de filtre à la liste (303a); retirer un emplacement ou plusieurs emplacements de filtre de la liste (303a); ou changer l'ordre des emplacements de filtre sur la liste (303a).

17. Système (110) de gestion de la distribution de messages, pour gérer la distribution de messages d'une source à une destination, comprenant : des moyens d'envoi de message pour envoyer un message à un emplacement; et des moyens de détermination si un message doit être soumis à un filtre ou à plusieurs filtres avant de poursuivre sa distribution à sa destination, dans lequel, s'il est déterminé que le message ne doit pas être soumis à un filtre, le message continue à être distribué à la destination par le moyen d'envoi de message et s'il est déterminé que le message doit être soumis à un filtre ou à une pluralité de filtres, le message est envoyé au filtre identifié par le moyen d'envoi de message ou à chaque filtre identifié, tour à tour, par le moyen d'envoi de message, dans lequel : si le message satisfait les critères de filtrage et si d'autres filtres doivent être appliqués, le message est envoyé au filtre suivant; si le message satisfait les critères de filtrage et si d'autres filtres ne doivent pas être appliqués, le message est distribué à sa destination; et si, à un stade quelconque, le message ne satisfait pas les critères de filtrage d'un filtre particulier, la distribution du message est arrêtée, dans lequel, si une pluralité de filtres est appliquée, les filtres sont appliqués dans un ordre particulier déterminé en envoyant de l'information se rapportant à l'emplacement du filtre, sous la forme d'une liste (303a), les emplacements de filtre étant ordonnés sur la liste (303a) dans l'ordre où ils exigent d'être appliqués et en envoiyant le message à chaque emplacement de filtre de la liste (303a), tour à tour.

18. Système (110) de gestion de la distribution de message suivant la revendication 17, dans lequel les filtres à appliquer au message distribué sont prévus en des emplacements distincts reliés au système (110) de gestion de la distribution de message.

19. Système (110) de gestion de la distribution de message suivant la revendication 18, dans lequel le système peut fonctionner pour faire varier n'importe lequel ou tous des suivants : si un filtrage doit être appliqué à un trajet particulier de message, quels filtres doivent être appliqués à des trajets particuliers de message et dans quel ordre des filtres doivent être appliqués à des trajets particuliers de message.
